# EUROPÄISCHE PATENTSCHRIFT

(11) **EP 3 021 032 B1**
(45) Veröffentlichungstag und Bekanntmachung des Hinweises auf die Patenterteilung: **18.12.2019**
(21) Anmeldenummer: 14193458.8
(22) Anmeldetag: 17.11.2014
(51) Int. Cl.: F17C 3/08, F17C 9/02, F17C 13/02, B62D 47/00

(54) **Vorrichtung zur Aufnahme eines Kryofluids**
Device for holding a cryofluid
Dispositif de réception d'un fluide cryogénique

(43) Veröffentlichungstag der Anmeldung: 18.05.2016
(73) Patentinhaber: SALZBURGER ALUMINIUM AKTIENGESELLSCHAFT, 5651 Lend (AT)
(72) Erfinder: Lind, Christoph, 8200 Gleisdorf (AT); Nußbaumer, Christian, 5505 Mühlbach am Hochkönig (AT)
(74) Vertreter: Weiser, Andreas

(56) Entgegenhaltungen:
- EP-A1- 2 765 296
- US-A1- 2010 108 687

## Beschreibung

Die vorliegende Erfindung betrifft eine Vorrichtung zur Aufnahme eines Kryofluids, umfassend einen Druckbehälter mit einem allgemein-zylindrischen Mantel und einer an einer Stirnebene des Mantels ansetzenden Endkappe sowie einen an den Druckbehälter angeschlossenen Wärmetauscher zur Verdampfung des Kryofluids.

Um den Energiegehalt von Energieträgern, welche unter Normalbedingungen gasförmig sind, zu erhöhen, werden diese für Transport- und Lagerungszwecke entweder komprimiert und in Druckbehältern gespeichert oder auf Tieftemperatur abgekühlt und dabei zu einem Kryofluid zumindest teilverflüssigt und in temperaturisolierten Behältern gespeichert. Zum Antrieb von Fahrzeugen werden z.B. verflüssigtes Erdgas (liquefied natural gas, LNG) oder verflüssigter Wasserstoff als Kryofluide mit hoher Energiedichte gespeichert, um hinterher zum Betrieb von im wesentlichen herkömmlichen Verbrennungskraftmaschinen oder Brennstoffzellen der Fahrzeuge genutzt zu werden.

Zu diesem Zweck wird das im flüssigen Zustand gespeicherte Kryofluid mittels eines Wärmetauschers in einen gasförmigen Zustand umgewandelt. Wärmetauscher dieser Art benötigen jedoch viel Platz am Fahrzeug. Weiters werden durch die Vielzahl der am Fahrzeug verteilten Komponenten Wartungsarbeiten erschwert.

Die EP 2 765 296 A1 zeigt einen gekrümmten Wärmetauscher, der an die Form des Druckbehälters angepasst ist. Ein solcher Wärmetauscher nimmt jedoch viel Platz vor der Endkappe ein, wodurch weniger Platz für die sich in diesem Bereich befindlichen Armaturen zur Verfügung steht. Dieses Problem wird weiter dadurch verschlimmert, dass die Anschlüsse für das Wärmetauschmedium bzw. der Ausgang des Wärmetauschers, der das gasförmige Kryofluid ausgibt, weit von der jeweiligen Anschlussstelle im Fahrzeug entfernt sind. Dies stellt unter anderem thermische Einschränkungen für den Wärmetauscher dar, da das Wärmetauschmedium so größere Wege zurücklegen muss. Weiters wird der im Fahrzeug ohnehin begrenzte Platz durch die zusätzlichen Leitungslängen weiter verringert, und diese sind auch anfällig gegenüber Vibrationen.

Die Erfindung setzt sich zum Ziel, eine Vorrichtung zu schaffen, welche den bestehenden Bauraum besser ausnutzt und besonders kurze Anschlussleitungen zum Fahrzeug ermöglicht.

Dieses Ziel wird mit einer Vorrichtung der einleitend genannten Art erreicht, die sich gemäß der Erfindung dadurch auszeichnet, dass der Wärmetauscher im Wesentlichen stabförmig ist eine gerade Form hat und normal zur Zylinderachse des Mantels an der Außenseite der Endkappe und außermittig zu dieser liegt.

Die Erfindung schafft somit eine Vorrichtung, die einen besonders platzsparenden Anbau des Druckbehälters und des Wärmetauschers an einen Fahrzeugrahmen ermöglicht. Durch die beschriebene Maßnahme können die vom Wärmetauscher ausgehenden, mit dem Fahrzeug zu verbindenden Ein- und Ausgänge, d.h. der Ein- und Ausgang für das Wärmetauschmedium bzw. der Ausgang für das gasförmige Kryofluid, möglichst nahe dem Fahrzeugrahmen vorgesehen werden. Dadurch können die Leitungslängen vom Fahrzeug zu den genannten Ein- und Ausgängen bei gleichzeitig kompakter Anbauweise des Wärmetauschers am Druckbehälter kürzestmöglich gehalten werden. Durch kürzere Leitungen kann Bauraum weiter eingespart werden und deren Lebensdauer verlängert werden, da Vibrationen reduziert und Resonanzeffekte verringert werden. Zudem kann das Wärmetauschmedium auf kürzerem Wege zum Wärmetauscher gebracht und so besser ausgenutzt werden. Im Vergleich zu einer parallel neben dem Druckbehälter liegenden Wärmetauscheranordnung beeinträchtigt die erfindungsgemäße Anordnung des Wärmetauschers nicht die Montage des Druckbehälters auf herkömmlichen, standardisierten Tragkonsolen.

In einer bevorzugten Ausführungsform der Erfindung ist die Endkappe konvex und der Wärmetauscher liegt zumindest teilweise zwischen der genannten Stirnebene und der Scheitelebene der Endkappe normal zur Zylinderachse des Mantels. Diese besonders vorteilhafte Ausführungsform beruht auf der Erkenntnis der Anmelderin, dass nicht nur der Platz zwischen dem Druckbehälter und dem Fahrzeugrahmen, an dem der Druckbehälter montiert werden soll, größtmöglich ausgenutzt werden kann, sondern noch mehr Platz eingespart werden kann, indem der stabförmige Wärmetauscher in einem Zwickel des Druckbehälters, der sich durch die Krümmung der Endkappe ergibt, montiert wird. Dadurch wird sowohl der Eckbereich, der sich zwischen Druckbehälter und Fahrzeugrahmen ergibt, als auch der Zwickelbereich neben der konvexen Endkappe ausgenutzt.

Gemäß einem bevorzugten Merkmal der Erfindung umfasst die Vorrichtung weiters eine Abdeckung mit in Richtung der Zylinderachse des Mantels gesehen D-förmiger Kontur, wobei der Wärmetauscher im Eckbereich zwischen der Abdeckung und der Endkappe und parallel zur geraden Seite des D liegt. Bevorzugt beherbergt diese Abdeckung auch an den Druckbehälter angeschlossene Armaturen und Anschlussstutzen.

Diese Ausführungsform der Erfindung schafft eine Abdeckung, die den Wärmetauscher und die an der Endkappe montierten Leitungen und Armaturen schützt und mechanische Beschädigungen durch z.B. Steinschlag während der Fahrt hintanhält. Durch die D-Form der Abdeckung wird zudem der Spalt zwischen Fahrzeugrahmen und Druckbehälter reduziert, was wiederum zu einer Reduzierung des Luftwiderstands durch Reduzierung der in diesem Spalt auftretenden Luftwirbel bei der Fahrt des Fahrzeugs führt.

Bevorzugt übergreift die Abdeckung den Wärmetauscher und die Endkappe mit zur Zylinderachse des Mantels parallelen Seitenwänden zumindest teilweise. Weiters bevorzugt sind die Armaturen und Anschlussstutzen durch Öffnungen in einer dem Wärmetauscher abgewandten Seitenwand der Abdeckung zugänglich. Dadurch können der Wärmetauscher und die an der Endkappe gelagerten Leitungen und Armaturen auch seitlich geschützt werden bzw. ein Zugang für diese geschaffen werden.

Gemäß einer weiteren vorteilhaften Ausgestaltung der Erfindung ist der Mantel des Druckbehälters zylindrisch, wobei die Seitenwände der Abdeckung über zumindest einen Teil der Länge des Mantels vorgezogen sind. Dadurch kann die Abdeckung bündig auf den Druckbehälter montiert werden, wodurch Staub und Verschmutzungen innerhalb der Abdeckung vermieden werden können. Zu diesem Zweck kann die Abdeckung auch eine Rückwand haben, um einen kreisförmigen Querschnitt des Druckbehälters im Bereich der Abdeckung auf eine D-Form zu erweitern.

In einer zur vorgenannten Ausgestaltung alternativen Ausführungsform hat der Druckbehälter in Richtung der Zylinderachse gesehen D-förmige Kontur, wobei die geraden Seiten der D's von Abdeckung und Druckbehälter im Wesentlichen parallel sind. Dadurch wird ein bündiger Anschluss zwischen Abdeckung und Druckbehälter erreicht, wobei die D-förmige Abdeckung einen platzoptimierten Bauraum für den Wärmetauscher bereitstellt und der D-förmige Druckbehälter ein für den zur Verfügung stehenden Einbauraum optimiertes Volumen hat.

In jeder Variante ist es vorteilhaft, wenn die Endkappe eine an die Umfangsform des Wärmetauschers angepasste Einbuchtung zur teilweisen Aufnahme des Wärmetauschers hat. Druckbehälter für Kryofluid sind häufig doppelwandig aufgebaut, mit einer Innenwand und einer gegenüber dieser thermisch isolierten Außenwand. Um Bauraum einzusparen, ohne das Innenvolumen des Behälters zu beeinträchtigen, kann der Druckbehälter der Erfindung die Einbuchtung z.B. nur in der Außenwand aufweisen, um den Wärmetauscher dort teilweise aufzunehmen.

Bevorzugt mündet der Ausgang des Wärmetauschers für Kryofluid in einer zur Zylinderachse des Mantels normalen Ebene aus. Weiters bevorzugt hat der Wärmetauscher einen Eingang und einen Ausgang für Wärmetauschmedium, die parallel zu dem Ausgang für Kryofluid liegen und damit ebenfalls derart ausmünden. In jeder Einbauart der Vorrichtung, sei es mit vertikal oder horizontal angeordnetem Wärmetauscher, können die Ein- bzw. Ausgänge des Wärmetauschers bevorzugt zum Fahrzeugrahmen hin gerichtet werden, um die Leitungslängen für das Wärmetauschmedium zu reduzieren bzw. um den Leitungsausgang des Kryofluids zu verkürzen. Wenn die Abdeckung Seitenwände hat, durchsetzt der Ausgang für Kryofluid dabei bevorzugt die zum Wärmetauscher parallele Seitenwand der Abdeckung.

Der Wärmetauscher kann grundsätzlich von jeder in der Technik bekannten Art sein, z.B. ein Plattenwärmetauscher, Spiralwärmetauscher, Rohrbündelwärmetauscher, U-Rohrwärmetauscher, Mantelrohrwärmetauscher, Heizregister, Gegenstrom-Schichtwärmetauscher oder dergleichen.

Die Erfindung wird nachstehend anhand von in den beigeschlossenen Zeichnungen dargestellten Ausführungsbeispielen näher erläutert. In den Zeichnungen zeigen:
Fig. 1 die erfindungsgemäße Vorrichtung in einer Perspektivansicht;
Fig. 2 die Vorrichtung von Fig. 1 in einer teilweise aufgebrochenen ausschnittsweisen Perspektivansicht;
die Fig. 3 die Vorrichtung von Fig. 1 in einer schematischen Draufsicht;
Fig. 4 eine weitere Ausführungsform der erfindungsgemäßen Vorrichtung in einer schematischen Draufsicht;
Fig. 5 die Vorrichtung von Fig. 1 in einer schematischen Stirnansicht; und
die Fig. 6 - 8 weitere Ausführungsformen der erfindungsgemäßen Vorrichtung in schematischen Stirnansichten.

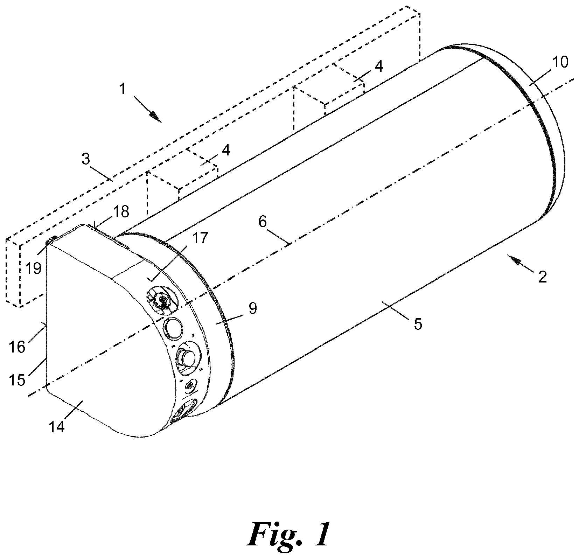

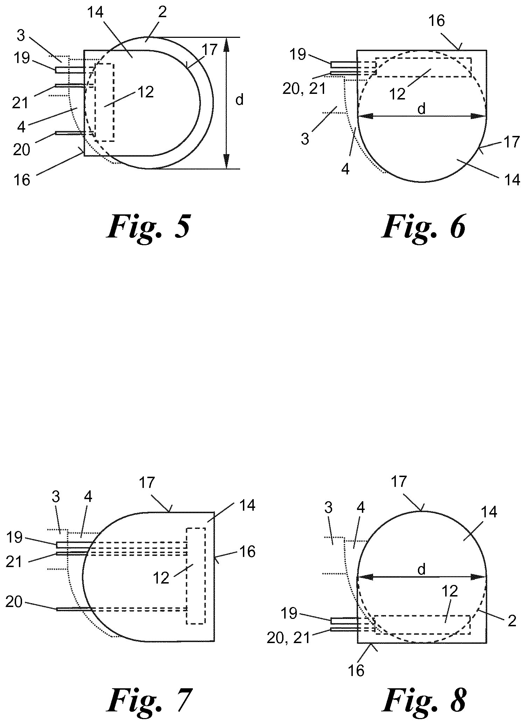

Fig. 1 zeigt eine Vorrichtung 1 mit einem Druckbehälter 2 zur Aufnahme eines Kryofluids. Das Kryofluid kann beispielsweise Erdgas sein, das bei Temperaturen von bis zu -161°C und einem Druck von bis zu 16 bar zumindest teilweise verflüssigt vorliegt (liquefied natural gas, LNG), oder ein vergleichbares, in Verbrennungskraftmaschinen oder Brennstoffzellen einsetzbares Kryofluid, z.B. verflüssigter Wasserstoff. Die Vorrichtung 1 wird beispielsweise in der Art eines herkömmlichen Kraftstoffbehälters seitlich am Chassis bzw. Rahmen 3 eines nicht weiter dargestellten Nutzfahrzeugs, z.B. eines Lastkraftwagens (LKWs) oder Personenkraftwagens (PKWs), montiert und kann dazu mit standardisierten Konsolensystemen, z.B. L- oder sichelförmigen Tragkonsolen 4 (Fig. 5), zusammenwirken.

Das Kryofluid kann aber auch ein Kältemittel sein, beispielsweise Flüssigstickstoff, mit dem das Kühlsystem von Kühllastern betrieben wird, z.B. von Lebensmitteltransportern. Demgemäß kann die Vorrichtung 1 auch für die Speicherung solcher Kältemittel auf LKWs oder LKW-Anhängern verwendet werden.

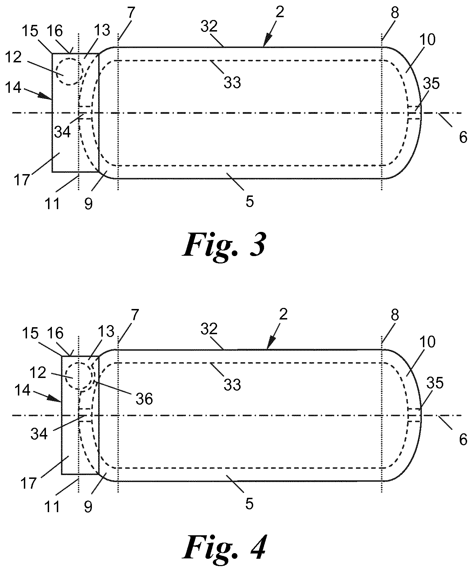

Der Druckbehälter 2 umfasst einen etwa zylindrischen Mantel 5 mit einer Zylinderachse 6 und zwei Stirnseiten 7, 8 (Fig. 3) sowie zwei an diese ansetzende Endkappen 9, 10. Die eine Endkappe 9 ist in der gezeigten Ausführungsform konvex, d.h. kalotten- bzw. kuppelförmig, und hat eine Scheitelebene 11 (Fig. 3). Die andere Endkappe 10 ist ebenfalls kalottenförmig, könnte aber auch eine beliebige andere Form einnehmen.

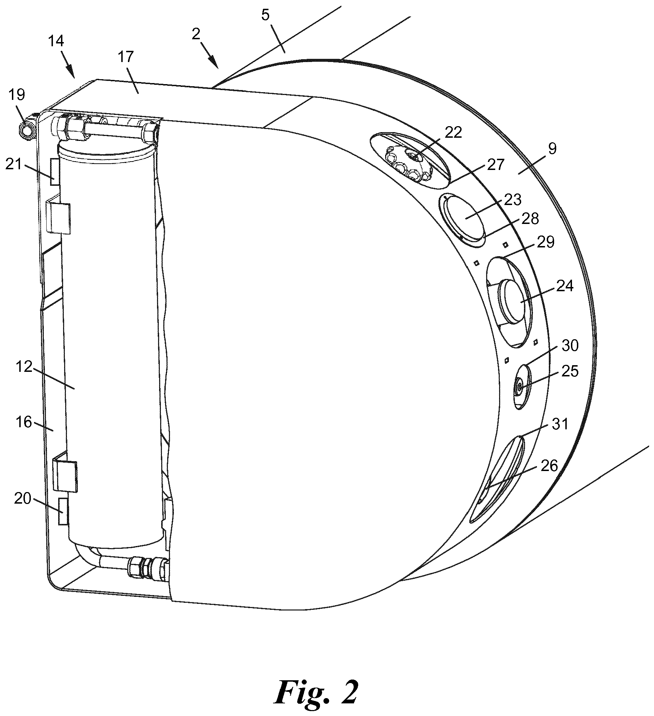

Um das im Druckbehälters 2 in flüssigem Zustand gespeicherte Kryofluid in einen gasförmigen Zustand umzuwandeln, verfügt die Vorrichtung 1 über einen Wärmetauscher 12, der später anhand der Fig. 2 noch ausführlicher erläutert wird. Für eine platzsparende Raumaufteilung ist der Wärmetauscher 12 stabförmig ausgebildet und normal zur Zylinderachse 6 des Mantels 5 an der Außenseite der Endkappe 9 außermittig zu dieser angeordnet. Unter stabförmig wird eine langgestreckte, gerade Form mit beliebigem Querschnitt verstanden. Wie aus den Fig. 2 und 3 ersichtlich, liegt der Wärmetauscher 12 dabei insbesondere - zu einem Teil - zwischen der Stirnseite 7 des Mantels 5 und der Scheitelebene 11 der Endkappe 9, d.h. in jenem Zwickel 13, der zwischen der Scheitelebene 11 und dem Randbereich der Endkappe 9 auftritt.

Zum Schutz des Wärmetauschers 12 und weiterer im Bereich der Endkappe 9 angeordneter Armaturen des Druckbehälters 2 ist die Endkappe 9 mit einer abnehmbaren Abdeckung 14 ausgestattet. Die Abdeckung 14 hat in Richtung der Zylinderachse 6 des Mantels 5 gesehen etwa D-förmige Kontur, wobei die gerade Seite 15 des "D" hier etwa vertikal und dem Fahrzeugrahmen 3 zugewandt liegt. Die Abdeckung 14 kann ferner zur Zylinderachse 6 des Mantels 5 parallele Seitenwände 16, 17 haben, mit welchen sie den Wärmetauscher 12 und die Endkappe 9 (zumindest teilweise) übergreift. Optional kann die Abdeckung 14 an ihrer Rückseite eine durchbrochene Rückwand bildende Eckstücke 18 aufweisen, um dort die zwischen zylindrischem Druckbehälter 2 und D-förmiger Abdeckung 14 verbleibenden Spalte bzw. Lücken zu verschließen.

In Fig. 2 ist die Abdeckung 14 teilweise aufgebrochen dargestellt. Wie ersichtlich liegt der Wärmetauscher 12 im Eckbereich zwischen der Abdeckung 14 und der Endkappe 9 parallel zur geraden Seite 15 des "D" bzw. geraden Seitenwand 16 der Abdeckung 14, wodurch sich eine optimale Platzausnutzung des Zwickels 13 zwischen D-förmiger Abdeckung 14 und konvexer Endkappe 9 ergibt.

Über hier nicht weiter dargestellte, unter der Abdeckung 14 gut geschützte Armaturen wird dem Wärmetauscher 12 flüssiges Kryofluid aus dem Druckbehälter 2 zugeführt. Das im Wärmetauscher 12 erwärmte und in den gasförmigen Zustand übergeführte Kryofluid steht an einem Ausgang 19 des Wärmetauschers 12 zur Verfügung und kann von dort einem (nicht dargestellten) Fahrzeugmotor zugeführt werden. Der Wärmetauscher 12 verfügt dabei über einen Eingang 20 und einen Ausgang 21 für ein Wärmetauschmedium, z.B. Motorkühlmittel.

Der Wärmetauscher 12 kann von jeder in der Technik bekannten Art sein, die eine Ausgestaltung in Stabform ermöglicht. Der Wärmetauscher 12 kann beispielsweise als Kreuzstrom- oder Kreuzgegenstromwärmetauscher, Plattenwärmetauscher, Spiralwärmetauscher, Rohrbündelwärmetauscher, U-Rohrwärmetauscher, Mantelrohrwärmetauscher, Heizregister oder Gegenstrom-Schichtwärmetauscher ausgebildet sein.

Ein Handventil 22 zur Unterbrechung der Verbindung zwischen Wärmetauscher 12 und Druckbehälter 2, ein Manometer 23 zur Druckanzeige des im Druckbehälter 2 vorherrschenden Gasdrucks, eine Betankungskupplung 24 zur Füllung des Druckbehälters 2 sowie ein Auslass 25 samt Handventil 26 zur manuellen Reduzierung des im Druckbehälter 2 vorherrschenden Gasdrucks sind über Öffnungen 27, 28, 29, 30 und 31 in der Abdeckung 14 zugänglich, die bevorzugt in der gekrümmten Seitenwand 17 der Abdeckung 14 ausgebildet sind, welche dem Bogen des "D" ihrer D-förmigen Kontur folgt.

Die Fig. 3 - 8 zeigen verschiedene Ausführungsformen des Druckbehälters 2, der Abdeckung 14 und des Wärmetauschers 12 und deren Positionierung relativ zueinander.

Gemäß den Fig. 3 und 4 ist der Druckbehälter 2 bevorzugt doppelwandig ausgebildet und hat eine Außenwand 32 und eine Innenwand 33, die gegenüber der Außenwand 32 thermisch isoliert ist, z.B. durch Vakuum zwischen den beiden Wänden. Die Innenwand 33 kann dabei an einem Ende des Druckbehälters 2 über ein Festlager 34 und am anderen Ende über ein Loslager 35 an der Außenwand 33 gelagert sein, um eine etwaige thermische Ausdehnung der Innenwand 34 zu kompensieren.

Wie in Fig. 4 gezeigt, kann die Endkappe 9, insbesondere ihre Außenwand 33, mit einer Einbuchtung 36 zur teilweisen Aufnahme des Wärmetauschers 12 versehen sein, um den erforderlichen Bauraum weiter zu verringern. Die Einbuchtung 36 ist an die äußere Form des Wärmetauschers 12 angepasst und kann sich z.B. bis knapp zur Innenwand 34 erstrecken.

Wie bereits erwähnt ist der Mantel 5 allgemein-zylindrisch. Unter dem Begriff "allgemein-zylindrisch" wird ein Zylinder mit einer beliebigen Grund- bzw. Querschnittsflache verstanden, sei sie kreisrund, oval, rechteckig, quadratisch oder quadratisch mit abgerundeten Ecken oder sonstwie geformt. So kann der Mantel 5 in einer alternativen Ausführungsformen insbesondere auch einen D-förmigen Querschnitt ähnlich der D-förmigen Kontur der Abdeckung 14 haben. Bevorzugt ist die gerade Seite 14 der D-förmigen Kontur der Abdeckung 14 hierbei parallel zur geraden Seite des D-förmigen Querschnitts des Mantels 5, besonders bevorzugt mit dieser fluchtend. Ferner kann die Abdeckung 14 sogar deckungsgleich mit dem Mantel 5 sein, gesehen in Richtung der Zylinderachse 6; in dieser Ausführungsform bildet die Abdeckung 14 gleichsam eine Verlängerung des Mantels 8, welche die Endkappe 9 umschließt.

Die gerade Seite 15 der D-förmigen Kontur der Abdeckung 14 kann kürzer sein als der Durchmesser d des Mantels 5, siehe Fig. 5, oder im Wesentlichen gleichlang, wie in Fig. 6 gezeigt. In letzterem Fall können die Seitenwände 16, 17 der Abdeckung 14 auch - teilweise oder ganz - über die Länge des Mantels 5 vorgezogen sein, bis hin zur gegenüberliegenden Endkappe 10, und diese sogar mit einer Rückwand (nicht gezeigt) der Abdeckung 14 abdecken bzw. umhüllen.

Der Druckbehälter 2 ist, wie eingangs erörtert, mittels einer oder mehrerer Tragkonsolen 4 am Fahrzeugrahmen 3 gelagert. Für einen zylindrischen Druckbehälter 2 werden dazu bevorzugt sichelförmig gekrümmte Tragkonsolen 4 verwendet, die eng an eine Seite des Außenumfangs des Mantels 5 angepasst sind, ohne diesen zu untergreifen, um die Bodenfreiheit des Fahrzeugs nicht zu beeinträchtigen. Auf den Tragkonsolen 4 kann der Druckbehälter 2 dann z.B. mittels herkömmlicher Spannbänder (nicht gezeigt) festgezurrt werden.

Die Einbaulage des Wärmetauschers 12 - und somit die Lage der geraden Seite 15 der D-förmigen Abdeckung 14, falls vorhanden - ist im Wesentlichen unabhängig von der verwendeten Form des Druckbehälters 2 und kann dabei - wie in den Fig. 1 - 5 gezeigt - insbesondere vertikal an der dem Fahrzeugrahmen 3 zugewandten Seite der Endkappe 9 sein. Dadurch befinden sich die Ein- und Ausgänge 19, 20 und 21 des Wärmetauschers 12 möglichst nahe dem Fahrzeugrahmen 3.

Alternativ könnte, wie in den Fig. 6 und 7 dargestellt, der Wärmetauscher 12 jedoch auch horizontal an der oberen Seite (Fig. 6) oder an der unteren Seite (Fig. 7) des Druckbehälters 2 liegen, wobei die Ein- und Ausgänge 19, 20 und 21 dann bevorzugt an der Stirnseite des Wärmetauschers 12 ausmünden, um einen möglichst geringen Abstand zum Fahrzeugrahmen 3 zu gewährleisten.

In einer weiteren, in Fig. 8 dargestellten Ausführungsform könnte der Wärmetauscher 12 auch vertikal und auf der dem Fahrzeugrahmen 3 abgewandten Seite des Druckbehälters 2 angeordnet sein. Dies ist z.B. bei einem D-förmig ausgebildeten Druckbehälter 2, der mit seiner geraden Seite vom Fahrzeugrahmen 3 abgewandt an sichelförmigen Tragkonsolen 4 montiert wird, von Vorteil, da hier die D-förmige Abdeckung 14 fluchtend mit dem D-förmigen Druckbehälter 2, gesehen in Richtung der Zylinderachse 6, ausgebildet sein kann.

Alternativ könnten L-förmige Tragkonsolen 4 auch eine nicht-runde Seite des Druckbehälters 2 abstützen, wobei der Wärmetauscher 12 wiederum in jeder der vorgenannten Einbaulagen relativ zum Fahrzeugrahmen 3 montiert sein kann.

Die Erfindung ist demgemäß nicht auf die dargestellten Ausführungsformen beschränkt, sondern umfasst alle Varianten, Modifikationen und Kombinationen, die in den Rahmen der angeschlossenen Ansprüche fallen.

## Patentansprüche

1. Vorrichtung zur Aufnahme eines Kryofluids, umfassend einen Druckbehälter (2) mit einem allgemein-zylindrischen Mantel (5) und einer an einer Stirnebene (7) des Mantels (5) ansetzenden Endkappe (9) sowie einen an den Druckbehälter (2) angeschlossenen Wärmetauscher (12) zur Verdampfung des Kryofluids, wobei der Wärmetauscher (12) an der Außenseite der Endkappe (9) und außermittig zu dieser liegt, **dadurch gekennzeichnet, dass** der Wärmertauscher (12) eine gerade Stabform hat und normal zur Zylinderachse (6) des Mantels (5) liegt.

2. Vorrichtung nach Anspruch 1, **dadurch gekennzeichnet, dass** die Endkappe (9) konvex ist und der Wärmetauscher (12) zumindest teilweise zwischen der genannten Stirnebene (7) und der Scheitelebene (11) der Endkappe (9) normal zur Zylinderachse (6) des Mantels (5) liegt.

3. Vorrichtung nach Anspruch 1 oder 2, **gekennzeichnet durch** eine Abdeckung (14) mit in Richtung der Zylinderachse (6) des Mantels (5) gesehen D-förmiger Kontur, wobei der Wärmetauscher (12) im Eckbereich zwischen der Abdeckung (14) und der Endkappe (9) und parallel zur geraden Seite (15) des D liegt.

4. Vorrichtung nach Anspruch 3, **dadurch gekennzeichnet, dass** die Abdeckung (14) ferner an den Druckbehälter (2) angeschlossene Armaturen (22, 23, 26) und Anschlussstutzen (24, 25) beherbergt.

5. Vorrichtung nach Anspruch 3 oder 4, **dadurch gekennzeichnet, dass** die Abdeckung (14) den Wärmetauscher (12) und die Endkappe (9) mit zur Zylinderachse (6) des Mantels (5) parallelen Seitenwänden (16, 17) zumindest teilweise übergreift.

6. Vorrichtung nach den Ansprüchen 4 und 5, **dadurch gekennzeichnet, dass** die genannten Armaturen (22, 23, 26) und Anschlussstutzen (24, 25) durch Öffnungen (27, 28, 29, 30, 31) in einer dem Wärmetauscher (12) abgewandten Seitenwand (17) der Abdeckung (14) zugänglich sind.

7. Vorrichtung nach Anspruch 5 oder 6, **dadurch gekennzeichnet, dass** der Mantel (5) des Druckbehälters (2) zylindrisch ist, wobei die Seitenwände (16, 17) der Abdeckung (14) über zumindest einen Teil der Länge des Mantels (5) vorgezogen sind.

8. Vorrichtung nach einem der Ansprüche 3 bis 6, **dadurch gekennzeichnet, dass** der Druckbehälter (2) in Richtung der Zylinderachse (6) gesehen D-förmige Kontur hat, wobei die geraden Seiten der D's von Abdeckung (14) und Druckbehälter (2) im Wesentlichen parallel sind.

9. Vorrichtung nach einem der Ansprüche 1 bis 8, **dadurch gekennzeichnet, dass** die Endkappe (9) eine an die Umfangsform des Wärmetauschers (12) angepasste Einbuchtung (36) zur teilweisen Aufnahme des Wärmetauschers (12) hat.

10. Vorrichtung nach einem der Ansprüche 1 bis 9, **dadurch gekennzeichnet, dass** ein Ausgang (19) des Wärmetauschers (12) für Kryofluid in einer zur Zylinderachse (6) des Mantels (5) normalen Ebene ausmündet.

11. Vorrichtung nach einem der Ansprüche 1 bis 10, **dadurch gekennzeichnet, dass** der Wärmetauscher (12) einen Eingang (20) und einen Ausgang (21) für Wärmetauschmedium hat, die parallel zu einem bzw. dem Ausgang (19) für Kryofluid liegen.

12. Vorrichtung nach einem der Ansprüche 1 bis 11 in Verbindung mit Anspruch 5, **dadurch gekennzeichnet, dass** ein bzw. der Ausgang (19) für Kryofluid die zum Wärmetauscher (12) parallele Seitenwand (16) der Abdeckung (14) durchsetzt.

## Claims

1. Apparatus for the reception of a cryogenic fluid comprising a pressure vessel (2) with a generally cylindrical mantle (5) and an end cap (9) attached to a frontal plane (7) of the mantle (5) as well as a heat exchanger (12) connected to the pressure vessel (2) for evaporation of the cryogenic fluid, wherein the heat exchanger (12) is located on the outer side of the end cap (9) and eccentrically thereto, **characterized in that** the heat exchanger (12) has a straight rod form and is located perpendicularly to the cylinder axis (6) of the mantle (5).

2. Apparatus according to claim 1, **characterized in that** the end cap (9) is convex and the heat exchanger (12) is located at least partially between said frontal plane (7) and the apex plane (11) of the end cap (9) and perpendicularly to the cylinder axis (6) of the mantle (5).

3. Apparatus according to claim 1 or 2, **characterized by** a cover (14) with a D-shaped contour when seen in direction of the cylinder axis (6) of the mantle (5), wherein the heat exchanger (12) is located in the corner region between the cover (14) and the end cap (9) and parallel to the straight side (15) of the D.

4. Apparatus according to claim 3, **characterized in that** the cover (14) further accommodates armatures (22, 23, 26) and connectors (24, 25).

5. Apparatus according to claim 3 or 4, **characterized in that** the cover (14) overlaps the heat exchanger (12) and the end cap (9) at least partially with side walls (16, 17) that are parallel to the cylinder axis (6) of the mantle (5).

6. Apparatus according to claims 4 and 5, **characterized in that** said armatures (22, 23, 26) and connectors (24, 25) are accessible via openings (27, 28, 29, 30, 31) in a side wall (17) of the cover (14) facing away from the heat exchanger (12).

7. Apparatus according to claim 5 or 6, **characterized in that** the mantle (5) of the pressure vessel (2) is cylindrical, wherein the side walls (16, 17) of the cover (14) extend forward over at least a part of the length of the mantle (5).

8. Apparatus according to any one of the claims 3 to 6, **characterized in that** the pressure vessel (2) has a D-shaped contour when seen in direction of the cylinder axis (6), wherein the straight sides of the Ds of the cover (14) and the pressure vessel (2) are substantially parallel.

9. Apparatus according to any one of the claims 1 to 8, **characterized in that** the end cap (9) has a recess (36) adapted to the circumferential shape of the heat exchanger (12) for a partial reception of the heat exchanger (12).

10. Apparatus according to any one of the claims 1 to 9, **characterized in that** an outlet (19) of the heat exchanger (12) for cryogenic fluid ends in a plane perpendicular to the cylinder axis (6) of the mantle (5).

11. Apparatus according to any one of the claims 1 to 10, **characterized in that** the heat exchanger (12) has an inlet (20) and an outlet (21) for heat exchange medium, which are located parallel to a or the outlet (19) for cryogenic fluid (19).

12. Apparatus according to any one of the claims 1 to 11 in combination with claim 5, **characterized in that** a or the outlet (19) for cryogenic fluid passes through the side wall (16) of the cover (14) that is parallel to the heat exchanger (12).

## Revendications

1. Dispositif de réception d'un fluide cryogénique comprenant un récipient sous pression (2) doté d'une enveloppe (5) généralement cylindrique et d'un capuchon d'extrémité (9) ajouté sur un plan frontal (7) de l'enveloppe (5), ainsi qu'un échangeur de chaleur (12) raccordé au récipient sous pression (2) pour l'évaporation du fluide cryogénique, où l'échangeur de chaleur (12) se situe sur le côté extérieur du capuchon d'extrémité (9) et décalé par rapport au centre du capuchon, **caractérisé en ce que** l'échangeur de chaleur (12) possède une forme de barre rectiligne et se situe de maniére normale par rapport à l'axe de cylindre (6) de l'enveloppe (5).

2. Dispositif selon la revendication 1, **caractérisé en ce que** le capuchon d'extrémité (9) est convexe et l'échangeur de chaleur (12) se situe de manière normale par rapport à l'axe de cylindre (6) de l'enveloppe (5) au moins partiellement entre ledit plan frontal (7) et le plan sommet (11) du capuchon d'extrémité (9).

3. Dispositif selon la revendication 1 ou 2, **caractérisé par** un revêtement (14) doté d'un contour en forme de D, vu dans la direction de l'axe de cylindre (6) de l'enveloppe (5), où l'échangeur de chaleur (12) se situe dans la zone de l'angle entre le revêtement (14) et le capuchon d'extrémité (9) et parallèlement par rapport au côté rectiligne (15) du D.

4. Dispositif selon la revendication 3, **caractérisé en ce que** le revêtement (14) abrite en outre des armatures (22, 23, 26) et des supports de raccordement (24, 25) raccordés au récipient sous pression (2).

5. Dispositif selon la revendication 3 ou 4, **caractérisé en ce que** le revêtement (14) empiète au moins partiellement sur l'échangeur de chaleur (12) et sur le capuchon d'extrémité (9) avec des parois latérales (16, 17) parallèles à l'axe de cylindre (6) de l'enveloppe (6).

6. Dispositif selon les revendications 4 et 5, **caractérisé en ce que** lesdites armatures (22, 23, 26) et lesdits supports de raccordement (24, 25) sont accessibles par des orifices (27, 28, 29, 30, 31) dans une paroi latérale (17) du revêtement (14) détournée de l'échangeur de chaleur (12).

7. Dispositif selon la revendication 5 ou 6, **caractérisé en ce que** l'enveloppe (5) du récipient sous pression (2) est cylindrique, où les parois latérales (16, 17) du revêtement (14) sont étirées vers l'avant sur au moins une partie de la longueur de l'enveloppe (5).

8. Dispositif selon l'une des revendications 3 à 6, **caractérisé en ce que** le récipient sous pression (2) a un contour en forme de D, vu dans la direction de l'axe de cylindre (6), où les côtés rectilignes du D du revêtement (14) et du récipient sous pression (2) sont sensiblement parallèles.

9. Dispositif selon l'une des revendications 1 à 8, **caractérisé en ce que** le capuchon d'extrémité (9) a une échancrure (36) adaptée à la forme périphérique de l'échangeur de chaleur (12) pour la réception partielle de l'échangeur de chaleur (12).

10. Dispositif selon l'une des revendications 1 à 9, **caractérisé en ce qu'**une sortie (19) de l'échangeur de chaleur (12) pour du fluide cryogénique débouche dans un plan normal par rapport à l'axe de cylindre (6) de l'enveloppe (5).

11. Dispositif selon l'une des revendications 1 à 10, **caractérisé en ce que** l'échangeur de chaleur (12) possède une entrée (20) et une sortie (21) pour du milieu échangeur de chaleur qui se situent parallèles par rapport à une ou la sortie (19) pour le fluide cryogénique.

12. Dispositif selon l'une des revendications 1 à 11 en combinaison avec la revendication 5, **caractérisé en ce qu'**une ou la sortie (19) pour du fluide cryogénique traverse la paroi latérale (16) du revêtement (14) parallèle à l'échangeur de chaleur (12).
